# EUROPÄISCHE PATENTANMELDUNG

(11) **EP 4 571 798 A1**
(43) Veröffentlichungstag der Anmeldung: **18.06.2025**
(21) Anmeldenummer: 24213185.2
(22) Anmeldetag: 15.11.2024
(51) Int. Cl.: H01F 1/147, H01F 1/22, H01F 3/02, H01F 41/02, H02K 1/02, H02K 1/04, H02K 15/021

(54) **VERFAHREN ZUR HERSTELLUNG EINES MAGNETBLECHSTAPELS FÜR EINE ELEKTRISCHE MASCHINE UND ELEKTRISCHE MASCHINE**

(30) Priorität: 15.12.2023 DE 102023212777
(71) Anmelder: Siemens Aktiengesellschaft, 80333 München (DE)
(72) Erfinder: SCHUH, Carsten, 85598 Baldham (DE)
(74) Vertreter: Siemens Patent Attorneys

(57) **Zusammenfassung**

Die Erfindung betrifft ein Verfahren zur Erzeugung eines Magnetblechstapels (2-2) für eine elektrische Maschine, umfassend folgende Schritte,
a) Erzeugen einer ersten kontinuierlichen Schlickerschicht (4), die weichmagnetische Partikel (5) umfasst,
b) Trocknen der ersten Schlickerschicht (4),
c) Aufbringen einer zweiten kontinuierlichen Schlickerschicht (6), die keramische Partikel (7) auf eine getrocknete Oberfläche der ersten Schicht (4),
d) Aufbringen einer dritten Schlickerschicht (40) auf die getrocknete zweite Schlickerschicht (6), wobei die dritte Schicht (40) unmagnetische Stahlpartikel aufweist,
e) Trocknen der dritten Schicht (40)und Aufbringen einer weiteren zweiten Schicht (6) auf die dritte Schicht (40),
f) Trocknen der weiteren zweiten Schicht (6)
g) Wiederholen der Schritte a) bis f) so dass ein Schlickerschicht-Laminat (10) im Grünzustand entsteht, wobei jeweils zwischen einer ersten Schicht (4) und einer dritten Schicht (40) eine zweite Schicht (6) angeordnet ist,
h) Heraustrennen von Magnetblechstapeln (2-1) im Grünzustand aus dem Laminat (10),
i) Entbindern des Magnetblechstapels (2-1),
j) Sintern des Magnetblechstapels (2-1) im Grünzustand zum Magnetblechstapel (2-2).

## Beschreibung

Die Erfindung betrifft ein Verfahren zur Herstellung eines Magnetblechstapels für eine elektrische Maschine nach dem Patentanspruch 1 und eine elektrische Maschine nach Anspruch 15.

In herkömmlichen elektrischen Maschinen weist der Stator oder auch der Rotor ein Blechpaket auf, um den elektrische Leiter gewickelt sind. Dieses Blechpaket besteht aus einer Vielzahl einzelner Magnetbleche, die übereinander gestapelt sind. In den allermeisten Fällen werden diese Blechpakete aus einem sogenannten Coil, das aus dem gewünschten Material, beispielweise einer weichmagnetischen Eisenlegierung besteht, herausgestanzt. Aus motortechnischen Gründen ist es zur Erreichung einer möglichst hohen Leistungsdichte zweckmäßig, die einzelnen Magnetbleche des Magnetblechstapels oder des Blechpaketes möglichst dünn zu gestalten. Die aus einer Folie oder einem Coil ausgestanzten Magnetbleche erreichen mit herkömmlichen technischen Mitteln eine Dicke, die nicht geringer als 200 pm bis 300 pm ist. Aus diesem Grund ist man in letzter Zeit dazu übergegangen, durch ein Schablonendruckverfahren, das auch ein Siebdruckverfahren einschließt, Magnetbleche möglichst endkonturnah in einem Grünzustand zu drucken. Ein Beispiel für diese Technologie zur Herstellung von Magnetblechstapeln mit endkonturnahem Siebdruck ist in der EP 4060882A1 gegeben. Ein weiteres Beispiel für diese Siebdrucktechnologie ist in der EP 3595148B1 dargestellt.

Bei der Herstellung von herkömmlichen Magnetblechen durch Ausstanzen dieser aus einem fortlaufenden Coil entsteht eine sehr große Menge von Abfall, die grundsätzlich im Hochofen als Eisenwerkstoff wiederverwertet werden kann, aber der Herstellungsprozess für ein neues Herstellen von entsprechenden Hochleistungsmaterialien ist entsprechend teuer. Ferner ist durch diese Technologie kaum oder nur sehr begrenzt die entsprechende Schichtdicke für Motoren mit einer hohen Leistungsdichte zu erreichen. Das Drucken von Magnetblechen mittels Schablonen ist für eine große Endfertigung nur mit einem sehr hohen Investitionsaufwand der Fertigungsanlagen zu erzielen.

Die Aufgabe der Erfindung besteht darin, ein Verfahren zur Herstellung eines Magnetblechstapels für eine elektrische Maschine, insbesondere einen Elektromotor mit einer gegenüber dem Stand der Technik höheren Leistungsdichte und höheren mechanischen Festigkeit bereitzustellen, der großtechnisch gegenüber den bekannten Verfahren mit einem geringeren Aufwand an Fertigungsanlagen darstellbar ist.

Die Lösung der Aufgabe besteht in einem Verfahren zur Herstellung eines Magnetblechstapels mit den Merkmalen des Patentanspruchs 1 und in einer elektrischen Maschine nach Anspruch 15.

Die Erfindung umfasst dabei folgendes Verfahren zur Erzeugung eines Magnetblechstapels für eine elektrische Maschine, das wiederum folgende Schritte beinhaltet,
a) erzeugen einer ersten kontinuierlichen Schlickerschicht, die weichmagnetische Partikel umfasst,
b) Trocknen der ersten Schlickerschicht,
c) Aufbringen einer zweiten kontinuierlichen Schlickerschicht, die keramische Partikel auf eine getrocknete Oberfläche der ersten Schicht,
d) Aufbringen einer dritten Schlickerschicht auf die getrocknete zweite Schlickerschicht, wobei die dritte Schicht unmagnetische Stahlpartikel aufweist,
e) Trocknen der dritten Schicht und Aufbringen einer weiteren zweiten Schicht auf die dritte Schicht,
f) Trocknen der weiteren zweiten Schicht
g) Wiederholen der Schritte a) bis f) so dass ein Schlickerschicht-Laminat im Grünzustand entsteht, wobei jeweils zwischen einer ersten Schicht und einer dritten Schicht eine zweite Schicht angeordnet ist,
h) Heraustrennen von Magnetblechstapeln aus dem Laminat,
i) Entbindern des Magnetblechstapels ,
j) Sintern des Magnetblechstapels.

Dabei ist anzumerken, dass die erste Schlickerschicht entweder auf einer Trägerfolie oder auf einem Trägerband erzeugt wird oder dass das Erzeugen der ersten Schlickerschicht auf einer bereits getrockneten zweiten Schlickerschicht erfolgt. Eine Trägerfolie oder ein Trägerband weist dabei eine glatte Oberfläche auf, die für ein Schlickergießen oder Schlickerziehen geeignet ist. Ein Trägerband ist dabei eine Trägerfolie, die in Form oder als Teil eines Förderbandes ausgestaltet ist.

Der Vorteil des beschriebenen Verfahrens gegenüber dem Stand der Technik besteht einerseits in Bezug zum herkömmlichen ausstanzten von Magnetblech aus einer Blechfolie darin, dass zum einen dünnere Magnetbleche durch das Schlickergießen erzeugt werden können. Ferner ist der durch das Heraustrennen erzeugte getrocknete Schlicker-Rest wesentlich leichter und mit geringerem Aufwand wieder aufzubereiten, als dies bei einer Metallfolie der Fall ist. Andererseits besteht der Vorteil der vorliegenden Erfindung gegenüber einem siebgedruckten Magnetblechs darin, dass eine großtechnische Herstellung mittels des Schlickergießens und ein anschließendes Handhaben des einzelnen Magnetblechs in Form eines Magnetblechstapels erleichtert wird. Somit sinken hier gegenüber dem Siebdruckverfahren die Produktionskosten.

Ein Vorteil gegenüber beiden grundsätzlichen Methode des StdT besteht darin, dass durch die dritte Schicht eine mechanisch hochfeste unmagnetische Stahlschicht eingebracht wird, so dass gegenüber herkömmlichen Magnetblechen und Magnetblechstapeln neben den besseren magnetischen Eigenschaften auch eine höhere mechanische Belastbarkeit vorliegt.

Die zweite Schicht, die dabei die keramischen Partikel umfasst, dient zum einen zur Stabilisierung der durch die erste Schicht erzeugten Magnetbleche und zur Abtrennung und zur Isolierung einzelner Magnetbleche untereinander. Grundsätzlich ist es möglich, nach Erzeugen des Magnetblechstapels und nach dem Sintern, die einzelnen Magnetbleche wieder zu vereinzeln, da die zweite Schicht aufgrund der keramischen Partikel eine höhere Sintertemperatur aufweist und je nach Prozessführung nicht vollständig durchgesintert ist und somit ein Vereinzeln ermöglicht wird. Es ist jedoch in den meisten Fällen zweckmäßig, die zweite Schicht in derart auszugestalten, dass auch hier durch den Sinterprozess eine Verfestigung stattfindet, sodass der Magnetblechstapel als Teil eines gesamten Blechpakets angesehen werden kann und mehrere dieser Magnetblechstapel zu einem wiederum übereinandergestapelt werden können. Auf diese Weise wird die Herstellung des Blechpaketes noch einmal deutlich vereinfacht und eine großtechnische Fertigung ermöglicht.

Die in den Patentansprüchen verwendeten Begriffe seien wie folgt definiert.

Weichmagnetische Partikel sind anorganische, in der Regel metallische Partikel, aber auch keramische Ferrite, die ein weichmagnetisches Verhalten aufweisen. Weichmagnetische Werkstoffe sind Materialien, die sich in einem Magnetfeld leicht magnetisieren lassen. Diese magnetische Polarisation kann z. B. durch einen elektrischen Strom in einer stromdurchflossenen Spule um einen Magnetkern oder durch Anwesenheit eines Permanentmagneten erzeugt werden. Die Polarisation führt in weichmagnetischen Werkstoffen zu einer vielfach höheren magnetischen Flussdichte, als sie das von außen wirkende magnetische Feld in Luft erzeugt. Vereinfacht ausgedrückt verstärkt ein weichmagnetisches Material ein äußeres Magnetfeld um die Werkstoffpermeabilität. Weichmagnetische Werkstoffe besitzen eine Koerzitivfeldstärke von in der Regel weniger als 1000 A/m. Wenn ein äußeres Magnetfeld die Koerzitivfeldstärke übersteigt, wird auch die Richtung des magnetischen Flusses im Werkstoff umgedreht.

Unmagnetische Stahlpartikel umfassen eine Eisenlegierung, die aufgrund ihrer Legierungszusätze den ferromagnetischen Charakter des Eisens verloren haben. Dabei haben die Legierungselemente Chrom und Nickel besondere Wirkungen auf die magnetischen und mechanischen Eigenschaften des aus den Partikel im Endprodukt gesinterten Materials. Dabei ist zu berücksichtigen, dass die Partikel an sich bestimmte Werkstoffeigenschaften nicht aufweisen, oder diese nicht messbar sind. Die resultierenden Werkstoffeigenschaften sind auch abhängig von einer Wärmebehandlung und mechanische Behandlungen. Das Legierungselement Chrom bewirkt jedoch ab einer bestimmten Konzentration ein paramagnetisches, also unmagnetisches Verhalten des resultierenden Materials. Nickel führt zu einer Bildung von Austeniten, die ebenfalls paramagnetisch wirken. Zudem steigern Austenite im Gefüge die mechanische Festigkeit und Ferrite (die durch das Chrom bevorzugt gebildet werden) die Duktilität des Werkstoffs. Somit weisen die Legierungselemente Chrom und Nickel positive Eigenschaften auf die zum einen zu unmagnetischen und zum anderen zu einem hochfesten Stützmaterial des Magnetblechstapels führen. Die unmagnetische Eigenschaft der dritten Schicht ist zur Reduzierung von Wirbelstromverlusten vorteilhaft.

Unter einem Schlicker wird hierbei ein Fluid verstanden, das zum einen funktional wirkende anorganische Partikel (Metallpartikel oder Keramikpartikel) aufweist, zum anderen umfasst der Schlicker organische oder anorganische Hilfsstoffe insbesondere Lösungsmittel (wässrig oder organisch), die zu einer gewünschten Viskosität beitragen und ferner gegebenenfalls Bindemittel, Plastifizierer, Weichmacher, Dispergatoren und/oder Entschäumer umfassen. Insbesondere Bindemittel sind für die Herstellung eine handhabbaren Grünkörpers nach einem Trocknungsprozess sehr vorteilhaft. Je nach Viskosität des Schlickers kann dieser gezogen oder gegossen werden (Ziehschlicker, Gießschlicker), bei sehr niedriger Viskosität kann der Schlicker versprüht werden (Sprühschlicker) oder bei einer hohen Viskosität auch gedruckt werden (beispielsweise im Siebdruck oder Schablonendruck. Hierbei spricht man von einer Druckpaste, die somit auch unter den Begriff Schlicker fällt).

Der Schlicker der ersten und auch der zweiten Schlickerschicht wird kontinuierlich aufgebracht, dies bedeutet, er wird insbesondere entlang eines Bandes (aber auch anderen flächigen Oberflächen) mit definierten Begrenzungslinien im Wesentlichen ohne strukturelle Unterbrechungen gleichmäßig aufgebracht. Im Gegensatz dazu weist eine diskontinuierliche Schlickerschicht eine definierte Struktur auf, die beispielsweise durch ein lokal definiertes Aufsprühen oder mittels einer Schablone aufgebracht wird.

Keramische Partikel sind anorganische, nichtmetallische Partikel, die in der Regel elektrisch schlecht leiten und einen Schmelzpunkt haben, der über dem der verwendeten Eisenlegierungen liegt.

Unter dem Begriff Trocknen wird dabei ein zumindest teilweise Entfernen des Lösungsmittels verstanden. Das Entfernen des Lösungsmittels sollte so weit erfolgen, dass sich eine feste Oberfläche auf der jeweiligen Schicht ausbildet, die dazu geeignet ist, dass auf ihr eine weitere Schicht aufgetragen werden kann.

Unter einem Körper im Grünzustand, also einem Grünkörper wird dabei ein Vorkörper für eine spätere Wärmebehandlung verstanden. Ein Grünkörper ist an sich in der Regel mechanisch selbsttragend und mechanisch begrenzt belastbar. Der Grünkörper weist in der Regel noch organische Bindemittel auf, die in der Regel in einem Entbinderungsprozess (Entbindern) thermisch zersetzt werden und sich verflüchtigen.

Durch eine weitere Wärmebehandlung in Form eines Sinterprozesses, bei dem anders als bei einem Schmelzvorgang über Diffusionsprozesse einzelne Partikel im Grünkörper durch Diffusionsprozesse eine zusammenhängende, stofflich verbundene Struktur bilden, wird der (entbinderte) Grünkörper in einen Sinterkörper überführt. Hierbei bilden sich zunächst zwischen den einzelnen Körnern Sinterhälse aus, aus denen sich bei fortschreitender Sinterung ein monolithischer, im Idealfall porenfreier Körper (Sinterkörper) bildet. Die Sintertemperatur ist dabei die Temperatur, bei dem die Partikel mit der Ausbildung von Sinterhälsen beginnen. Mit diesem Vorgang ist meistens ein messbarer Volumenschwund verbunden. Obwohl bei dem Sinterprozess Diffusionsprozesse überwiegen, können dennoch lokale Schmelzphasen auftreten.

Unter einem mittleren Partikeldurchmesser wird der sogenannte d₅₀ Wert verstanden, der mittels der Laserbeugungs-Partikelgrößenanalyse ermittelt wird. Der d₅₀ Wert ist der Medianwert des Partikeldurchmessers und kennzeichnet die Partikelgröße, die einen Durchgangssummenwert von 50 % aufweist. Somit sind 50 % der Partikelgrößen im Kollektiv kleiner und 50 % größer als dieser Wert.

In einer vorteilhaften Ausgestaltungsform der Erfindung weisen die weichmagnetischen Partikel mindestens 96 Gew.-% Eisen auf. Die besten weichmagnetischen Eigenschaften weist Reineisen auf, jedoch ist dem Eisen aus funktionalen Gründen häufig ein oder mehrere Legierungsbestandteile zugefügt, die insbesondere für mechanische Eigenschaften, jedoch auch für Sintereigenschaften zweckmäßig sein können. Jedoch ist ein Eisengehalt von 96 % und mehr besonders vorteilhaft.

Ferner ist es vorteilhaft, wenn die unmagnetischen Stahlpartikel der dritten Schicht eine Eisen-Chrom-Nickel-Legierung umfassen.

In einer weiteren Ausgestaltungsform der Erfindung weisen die keramischen Partikel eine Sintertemperatur auf, die mindestens 100° K über der Sintertemperatur der weichmagnetischen Partikel liegt. Dies führt dazu, dass die keramischen Partikel nicht im selben Maße sintern wie die weichmagnetischen Partikel. Dies hat Vorteile beim gemeinsamen Sintern von weichmagnetischen Partikeln und keramischen Partikeln, was die Sinterschwindung und die Formstabilität anbelangt. Ferner werden somit etwaige thermische Spannungen im gesinterten Magnetblech während des Sinterprozesses aber auch im Betrieb eines Blechpakets reduziert.

Grundsätzlich ist es zweckmäßig, dass sowohl die erste Schlickerschicht als auch die zweite Schlickerschicht auf eine Trägerfolie aufgebracht werden, wobei die Trägerfolie und eine Schlickerauftragsfolie translatorisch zueinander bewegt werden. Auf diese Weise entsteht ein kontinuierliches Band der jeweiligen Schicht, auf die wiederum die andere Schicht aufgetragen werden kann. Es handelt sich um ein technisch übliches Schlickergieß- oder Schlickerziehverfahren, das auch als Green Tape bezeichnet wird. In der Regel wird hierzu ein Förderband unter einer Schlickergießvorrichtung bewegt. Grundsätzlich kann aber auch die Schlickergieß- oder Schlickerauftragsvorrichtung translatorisch über ein Band bewegt werden. Das so entstehende Schlickerschicht-Laminat ist besonders gut geeignet, in großtechnischer Weise Magnetblechstapel zu erzeugen.

Eine weitere vorteilhafte Ausgestaltungsform der Erfindung besteht darin, dass die zweite Schlickerschicht diskontinuierlich aufgebracht wird. Hierzu ist grundsätzlich ein Sprühverfahren oder ein Druckverfahren zweckmäßig. Das diskontinuierliche Aufbringen der zweiten Schicht hat den Vorteil, dass die zweite Schicht nur an den Stellen aufgebracht wird, wo sie auch funktional benötigt wird. Da die zweite Schicht mit den keramischen Partikeln eine elektrisch isolierende Wirkung zwischen zwei nach dem Sinterprozess resultierenden Magnetblechen aufweist, ist es zweckmäßig, diese zweite Schicht auch nur dort aufzubringen, wo sie auch im Endzustand (im Magnetbelchstapel) benötigt wird. Das hat den Vorteil, dass beim späteren Heraustrennen eines Magnetblechstapels aus dem Schlickerschicht-Laminat die Heraustrennreste, also beispielsweise die Stanzreste, einkomponentig vorliegen, sodass diese nur die Bestandteile der ersten Schicht aufweisen und nicht mit den Bestandteilen der zweiten Schicht kontaminiert sind. Dies erleichtert das Wiederaufbereiten, also das Redispergieren dieser Komponente und bietet somit einen Vorteil bei der großtechnischen Herstellung der Magnetblechstapel.

Das diskontinuierliche Aufbringen kann dabei beispielsweise mittels einer Schablone erfolgen. Diese Schablone dient dazu, beispielsweise einen Schablonendruck durchzuführen, sodass nur an den Stellen auf einer getrockneten Oberfläche der ersten Schicht die zweite Schicht aufgebracht wird, die, wie beschrieben, auch funktional nötig ist. Dabei kann die Schablone für ein Sprühverfahren und ein Druckverfahren dienen.

In einer weiteren Ausgestaltungsform der Erfindung ist es zweckmäßig, dass die Dicke der ersten Schicht zwischen 20 pm und 200 pm, insbesondere zwischen 50 pm und 150 pm liegt. Diese Schichtdicke, die nach dem Sinterprozess noch etwa um 10 % - 20 % reduziert vorliegt, weist optimale weichmagnetische Eigenschaften auf, die ein Blechpaket in einer elektrischen Maschine benötigt. Insbesondere werden die Wirbelstromverluste in der elektrischen Maschine durch Magnetbleche mit den beschriebenen Dicken erheblich gegenüber dem Stand der Technik reduziert.

Entsprechend dünner ist die zweite Schicht ausgestaltet, wobei die Schicht zwischen 1 pm und 20 pm, insbesondere zwischen 1 pm und 10 µm dick ist. Die zweite Schicht dient insbesondere der elektrischen Isolierung der aus der ersten Schicht resultierenden Magnetbleche in der elektrischen Maschine.

In diesem Zusammenhang beträgt ein mittlerer Partikeldurchmesser der keramischen Partikel bevorzugt zwischen 0,5 pm und 5 pm, insbesondere liegt er zwischen 1 pm und 4 µm. Für die weichmagnetischen Partikel hingegen ist ein mittlerer Partikeldurchmesser zwischen 2 pm und 50 pm vorteilhaft, insbesondere liegt er zwischen 2 µm und 20 µm.

Das Heraustrennen von Magnetblechstapeln aus dem Laminat im Grünzustand erfolgt insbesondere bevorzugt mittels eines Stanzverfahrens, eines Laserschneid-Verfahrens oder eines Wasserstrahlverfahrens. Diese genannten Trennverfahren für Magnetblechstapel sind großtechnisch kostengünstig einsetzbar und liefern dabei eine besonders gute Geometrietreue.

Besonders vorteilhaft ist es ebenfalls, wenn Stanzreste aufbereitet werden und der Herstellung des Schlickers für die erste und / oder die zweite Schicht wieder zugeführt werden. Bei dieser Aufbereitung ist es ggf. notwendig, wenn die Herstellung mittels beider Schichten kontinuierlich erfolgt, dass eine Trennung der weichmagnetischen Partikel und der keramischen Partikel vorgenommen werden muss. Dies kann beispielsweise magnetisch erfolgen.

Ferner ist es zweckmäßig, dass mehrere gesinterte Magnetblechstapel zu einem Blechpaket aufgestapelt werden. Dabei kann es auch zweckmäßig sein, dass die Magnetblechstapel im Grünzustand gestapelt werden und gemeinsam zu einem Blechpaket gesintert werden.

Ein weiterer Bestandteil der Erfindung ist eine elektrische Maschine, das ein Blechpakt gemäß Patentanspruch 14 umfasst, das mittels eines Verfahrens nach Anspruch 1 - 13 hergestellt wird.

Weitere Ausgestaltungsformen und weitere Merkmale der Erfindung werden anhand der folgenden Figuren näher beschrieben. Dabei handelt es sich um rein schematische Ausgestaltungsformen, die keine Einschränkung des Schutzbereichs darstellen. Merkmale mit derselben Bezeichnung, aber in unterschiedlicher Ausgestaltungsform sind dabei mit demselben Bezugszeichen, ggf. mit einem Hochstrich, versehen.

Dabei zeigen:
Figur 1 eine schematische Querschnittsdarstellung durch die einzelnen Verfahrensschritte zur Erzeugung eines Schlickerschicht-Laminats als Vorprodukt eines Magnetblechstapels,
Figur 2 eine Draufsicht eines Magnetblechstapels im Grünzustand nach einem Heraustrennen aus einem Schlickerschicht-Laminat,
Figur 3 einen Querschnitt durch die Linie III gemäß Figur 2,
Figur 4 eine schematische Darstellung zur Herstellung eines Schlickerschicht-Laminats als Vorprodukt eines Magnetblechstapels analog Figur 1 mit einer diskontinuierlichen dritten Schlickerschicht,
Figur 5 eine Draufsicht eines Magnetblechstapels im Grünzustand nach einem Heraustrennen aus einem Schlickerschicht-Laminat erzeugt mittels eines Verfahrens nach Figur 4,
Figur 6 einen Querschnitt durch das Laminat, das gemäß Figur 4 erzeugt wird entlang der Linie VI in Figur 5,
Figur 7 eine schematische Darstellung des Aufeinanderstapelns von Magnetblechstapeln zu Blechpaketen,
Figur 8 eine beispielhafte geometrische Ausgestaltung eines Magnetblechstapels im Grünzustand,
Figur 9 ein Blechpaket im gesinterten Zustand, in dem einzelne übereinander gestapelte Magnetblechstapel eingezeichnet sind, wobei sich die Geometrien der einzelnen Magnetbleche gemäß Figur 7 und 8 unterscheiden,
Figur 10, eine schematische Darstellung einer Partikelstruktur (Gefüge) in einem Grenzbereich zwischen der ersten Schicht und der zweiten Schicht im Grünzustand und
Figur 11, ein Gefüge nach Figur 10 im gesinterten Zustand.

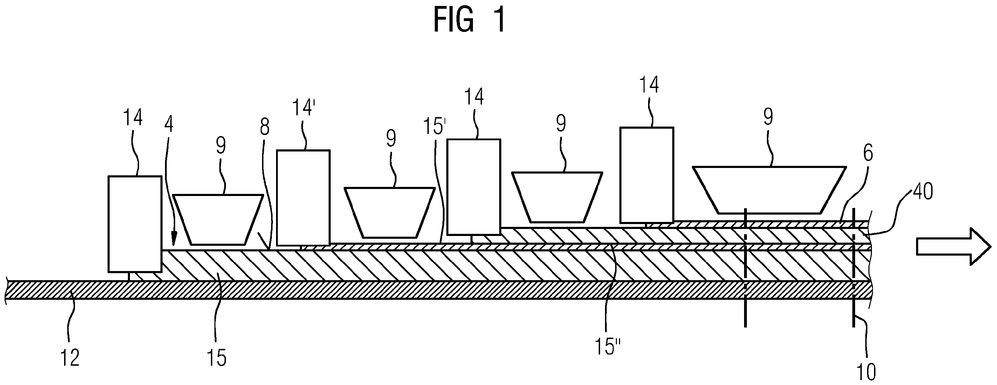

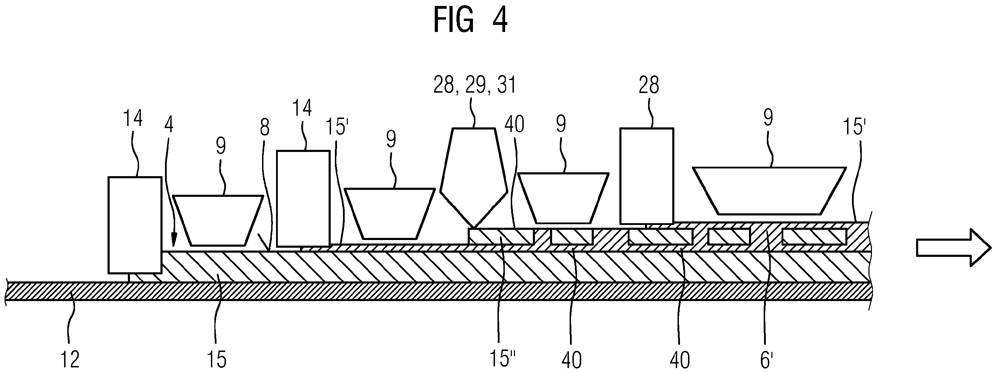

Für die Herstellung eines Schlickerschicht-Laminats 10, das schematisch in den Figuren 1 und 4 dargestellt ist, wird zunächst ein Schlicker 15 für eine erste Schlickerschicht 4 hergestellt. Dieser weist als zentralen, funktionalen Bestandteile ein Pulver auf, das anorganische, in der Regel metallische Partikel 5, hier in Form von 96 %igem Eisen mit weichmagnetischen Eigenschaften umfasst. Dieses anorganische Pulver wird in einem flüssigen Trägermaterial dispergiert. Das flüssige Trägermaterial ist für eine großtechnische Herstellung in kostengünstiger Weise bevorzugt auf Wasserbasis ausgestaltet. Dem flüssigen Trägermaterial können jedoch auch noch weitere funktionale flüssige Bestandteile zugesetzt sein. Diese können ganz oder teilweise Alkohole, Ether, Ester, Ketone, Amine, Amide, Säuren, Laugen oder ganz allgemein Kohlenwasserstoffe wie beispielweise Pentan, Hexan, Heptan oder Benzol-Derivate sein. Die genannten Stoffe können einzeln oder auch als Beimengung oder Mischungen vorliegen und somit das flüssige Trägermittel bilden. Dabei ist auch ein hoher Wasseranteil von 90 % und mehr vorteilhaft, da dies großtechnisch günstig darstellbar ist. Das Eisenpulver hat dabei in dieser Ausgestaltungsform einen d₅₀-Wert von 50 µm. Das bedeutet, dass 50 % der einzelnen Partikel 5 einen kleineren Durchmesser als 50 µm haben. Der maximale Durchmesser sollte nicht mehr als 100 µm sein.

Ferner ist es nötig, dem Schlicker 15 noch ein Bindemittel, insbesondere ein organisches Bindemittel zuzuführen. Hierbei gibt es eine Auswahl aus einer Vielzahl organischer Bindemittel, z.B. Zellulosen, Polyvinylalkohole, Polyvinylacetate (PVA) oder Polyvinylbutyrale (PVB) sowie Acrylatdispersionen. Dieses organische Bindemittel dient zur Verfestigung der anorganischen Partikel 5 in einem Grünzustand nach einem Trocknen und somit nach dem zumindest teilweise Beseitigen des flüssigen Trägermittels.

Ein Beispiel für die Zusammensetzung eines Schlickers 15 mit einer relativ niedrigen Viskosität um sie als Paste aufzutragen ist wie folgt gegeben:

| **wässrige Siebdruck- paste** | **Beispiel** | **Gewicht / g** | **Gewichts- %** | **Volumen / cm³** | **Volumen %** |
|---|---|---|---|---|---|
| **Pulver** | Reineisen | 4125 | 82,5% | 532,2580645 | 40,9% |
| **Sinteradditiv** | Fe3P | 121,6 | 2,4% | 18,04154303 | 1,4% |
| **Träger** | H2O | 480 | 9, 6% | 480 | 36,8% |
| **Dispergator** | Disperbyk 190 | 61,8 | 1,2% | 63,06122449 | 4,8% |
| **Binder** | Tylose | 40,5 | 0, 8% | 36,81818182 | 2,8% |
| **Weichmacher** | Glycerin | 50 | 1, 0% | 51,02040816 | 3,9% |
| **Entschäumer** | Agitan 299 | 24 | 0,5% | 24,48979592 | 1,9% |
| **Stellmittel** | Lubranil RN20 | 85 | 1,7% | 86,73469388 | 6,7% |
| **Antioxidationsmittel** | | 10 | 0,2% | 10,20408163 | 0,8% |
| **Thixotropiemittel** | | 0 | 0, 0% | 0 | 0,0% |

Eine alternative Zusammensetzung eines Schlickers ist wie folgt angegeben:

| **organische Paste** | **Beispiel** | **Gewicht** | **Gewichts-%** | **Volumen** | **Volumen %** |
|---|---|---|---|---|---|
| **Pulver** | Reineisen | 8500 | 85,0% | 1096,77419 | 45,7% |
| **Sinteradditiv** | FePO4 | 286,8 | 2,9% | 99,9303136 | 4,2% |
| **Träger** | Terpiniol | 920 | 9,2% | 920 | 38,3% |
| **Dispergator** | KD11 | 80,8 | 0,8% | 82,4489796 | 3,4% |
| **Binder** | PVB | 132 | 1,3% | 120 | 5,0% |
| **Weichmacher** | DOA | 70 | 0,7% | 71,4285714 | 3,0% |
| **Entschäumer** | | 0 | 0,0% | 0 | 0,0% |
| **Stellmittel** | | 0 | 0,0% | 0 | 0,0% |
| **Antioxidationsmittel** | Thixatrol | 10 | 0,1% | 10,2040816 | 0,4% |

Durch die Variation des Anteils des Trägermittels, in diesem bevorzugten Fall des Wassers und durch die Variation der Zusatzstoffe, wie beispielsweise des Stellmittels oder des Thixotropiemittels kann die Viskosität des Schlickers 15 entsprechend der Anforderungen der Auftragungsmethode angepasst werden

Das Eisenpulver enthält Verunreinigungen von Sauerstoff, Kohlenstoff, Stickstoff und Schwefel, wobei die stärkste Verunreinigung Sauerstoff ist, die allerdings höchstens 0,22 Gew. % beträgt. Die übrigen Verunreinigungen weisen weniger als 0,02 Gew. % auf. Auch Eisenlegierungen die bis zu 4 Gew. % Silizium aufweisen, können als weichmagnetische Partikel 5 Bestandteil des Schlickers 15 sein. Die Kornverteilung der Eispartikel des zweiten Beispiels ist wie folgt angegeben:

| | |
|---|---|
| D₁₀ | 3.71 µm |
| D₅₀ | 5.74 µm |
| D₉₀ | 10.05 µm |

Ferner kann dem Schlicker 15 zumindest teilweise ein redispergierter Rest einer vorhergehenden Herstellung eines Schlickerschicht-Laminats 10 zugeführt werden, der bei einem Strukturierungsprozess des noch zu beschreibenden Prozesses anfällt.

Für den Schlicker 15' einer zweiten Schicht 6, der keramische Partikel enthält, werden ähnliche Zusammensetzungen verwendet, wie dies bereits für den ersten Schlicker 15 der ersten Schicht 4 beschrieben ist. Insbesondere weisen die Keramikpartikel 7 einen mittleren Durchmesser D₅₀, also einen mittleren Partikeldurchmesser 22 auf, der zwischen 2 pm und 10 pm liegt. Diese Partikel 7 sind ebenfalls in einem flüssigen Trägermittel, bevorzugt auf wässriger Basis, zu dem Schlicker 15' eingebracht, der ebenfalls die beschriebenen Hilfsmittel umfasst. Insbesondere die Viskosität des Schlickers 15' für die zweite Schicht 6 wird dabei den unterschiedlichen Verfahrensbedingungen gemäß Figur 1 und Figur 4 angepasst, worauf noch im Weiteren eingegangen werden wird.

Die metallischen Partikel, die für einen Schlicker 15" verwendet werden, aus dem eine dritte Schicht 40 gebildet wird, umfassen ebenfalls Eisen-Legierungen, jedoch in Form von Eisen-Chrom und/oder Eisen-Chrom-Nickel-Legierungen. Diese Eisenlegierungen sind nichtmagnetisch und bilden nach einem Sintervorgang sehr hohe Festigkeiten aus. Ansonsten weisen diese Eisenpartikel für die dritte Schicht 40 vergleichbare Korngrößen auf wie dies für die Partikel 5 der ersten Schicht 4 der Fall ist. Auch die Zusatzstoffe zur Herstellung des Schlickers 15" sind von der Art und der Zusammensetzung analog zu denen, die bezüglich des Schlickers 15 beschrieben sind. Die Zusammensetzungen in den oben angegebenen Tabellen können unter Verwendung der nichtmagnetischen Eisenpartikel analog angewandt werden.

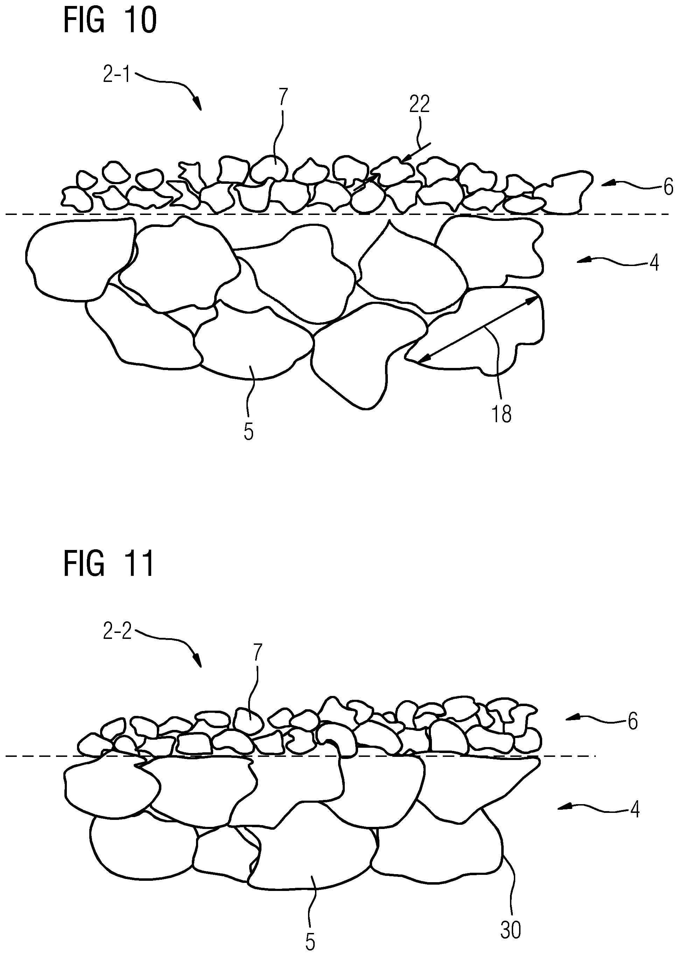

In Figur 1 wird dabei zunächst mittels einer Schlickerauftrag-Vorrichtung 14 auf eine Trägerfolie 12 mittels des ersten Schlickers 15 die erste Schlickerschicht 4 nach einem üblichen Green Tape-Verfahren aufgetragen. Die aufgetragene erste Schicht 4, die die beschriebenen weichmagnetischen metallischen Partikel 5 umfasst, wird im Weiteren, während die Trägerfolie 12 kontinuierlich als Förderband weitergezogen wird, mittels einer Trocknungsvorrichtung 9 zumindest oberflächlich angetrocknet. Dabei soll eine getrocknete Oberfläche 8 der ersten Schicht 4 so angetrocknet sein, dass nun die zweite Schicht 6 mittels einer Schlickerauftrag-Vorrichtung 14' aufgebracht werden kann. Die zweite Schicht 6 umfasst dabei neben dem flüssigen Trägermittel und den entsprechenden Bindemitteln insbesondere als funktionale Bestandteil die keramischen Partikel 7 (siehe Figur 10 und 11). Es folgt eine weitere Trocknung mittels einer weiteren Trocknungsvorrichtung 9, um die Oberfläche der zweiten Schicht 6 ebenfalls wiederum in einen solchen Trockenzustand zu versetzen, dass mittels einer weiteren Schlickerauftrag-Vorrichtung 14 eine weitere Schicht auftragbar ist. Diese Schicht ist nun die dritte Schicht 40, die mittels des Schlicker 15" aufgetragen wird und die als funktionale Bestandteile nichtmagnetische Eispartikel, beispielsweise in Form einer Eisen-Chrom-Nickel-Legierung enthält. Diese wird wiederum getrocknet und es erfolgt eine weitere zweite Schicht 6`. Nach einem ggf. weiteren noch folgenden vollständigen Trocknungsprozess entsteht durch das beschriebene Verfahren gemäß Figur 1 ein Schlickerschicht-Laminat 10, indem die vorhergehenden Schritte mehrmals wiederholt werden. Dieses Laminat 10 kann im einfachsten hier dargestellten Fall vier Schichten aufweisen, grundsätzlich ist aber je nach Verfahrensführung auch eine deutlich größere Anzahl von beispielsweise 40 Schichten möglich und technisch zweckmäßig. Nach dem jeweiligen Trocknen und Aufbringen einer weiteren Schlickerschicht handelt es sich bei den jeweiligen Schichten 4, 6, 40 nicht mehr um eine Schlickerschicht im eigentlichen Sinne, die Bezugszeichen 4, 6 und 40 werden jedoch für das bessere Verständnis für die jeweilige daraus resultierende Schicht im Grünzustand und im gesinterten Zustand beibehalten.

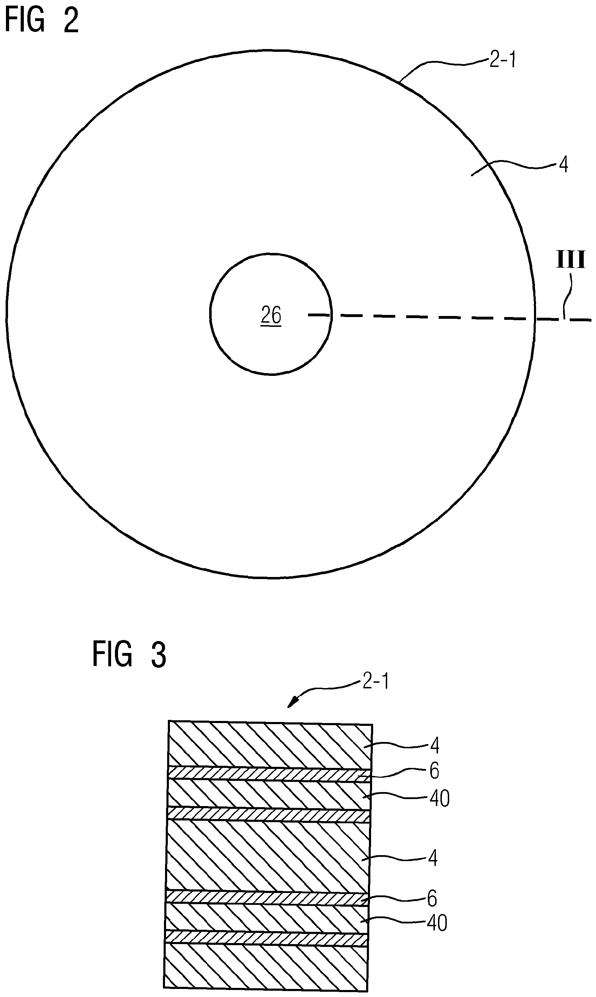

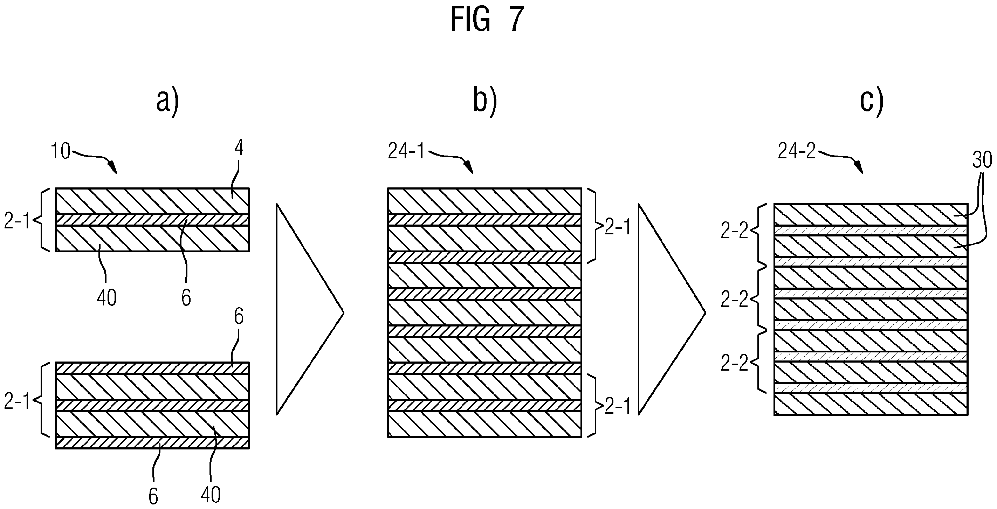

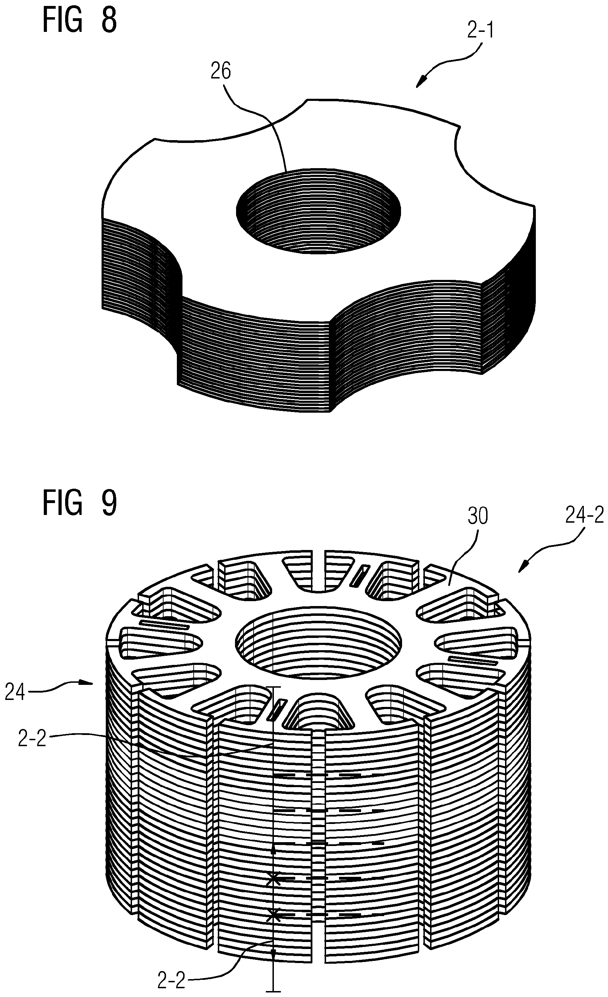

Aus diesem Schlickerschicht-Laminat 10 wird in einem hier nicht dargestellten Schritt ein Magnetblechstapel 2-1 herausgetrennt. Als Heraustrennverfahren hat sich hier insbesondere ein Stanzverfahren, ein Wasserstrahlschneideverfahren oder ein Laserschneideverfahren als zweckmäßig herausgestellt. Dabei kann es zweckmäßig sein, dass, wie in Figur 2 dargestellt, ein Magnetblechstapel 2-1 in einer rondenförmigen Gestalt herausgetrennt wird und später noch auf eine endkonturnahe Formgebung endbearbeitet wird. Es ist jedoch auch zweckmäßig, beim Ausstanzprozess bereits eine endkonturnahe Form herauszutrennen, wobei berücksichtigt werden muss, dass diese Kontur im sogenannten Grünzustand vorliegt. Deshalb ist der Magnetblechstapel 2-1 auch hier mit dem Bezugszeichen 2-1 versehen, wobei die 1 auf den Grünzustand hinweist. Bei einem weiteren, noch zu beschreibenden Sinterprozess setzt eine Sinterschrumpfung ein, sodass die Kontur im Grünzustand so gestaltet sein muss, dass eine Sinterschwindung in der Art wirkt, dass nach einer Sinterung ein nahezu fertiger Magnetblechstapel 2-2 entsteht. Dieser sollte möglichst endkonturnah sein und muss kaum noch nachbearbeitet werden. Ein derartiger endkonturnaher Magnetblechstapel im Grünzustand 2-1 ist beispielsweise in Figur 8 abgebildet. Die Magnetblechstapel 2-1 in den Figuren 2 und 7 weisen dabei unterschiedliche Konturen auf, wobei beide bereits eine Wellenbohrung 26 aufweisen.

In Figur 3 hingegen ist ein Querschnitt entlang der gestrichelten Linie III in Figur 2 gegeben. Auch hier handelt es sich um eine vereinfachte schematische Darstellung des Schichtaufbaus, in dem eine Abfolge einer ersten Schicht 4 mit weichmagnetischen Partikeln 5 und einer zweiten Schicht 6 mit keramischen Partikeln 7 zur Isolierung den Schichtaufbau bestimmt. Die dritte Schicht 40 wird dabei stets von der ersten Schicht 4 durch zwei zweite Schichten 6 getrennt, die aufgrund ihrer keramischen Zusammensetzung eine magnetische und elektrische Isolierung darstellt. In der Schichtabfolge gemäß Figur 3 ist zu erkennen, dass diese mit einer ersten Schicht 4 startet und mit einer zweiten Schicht 6 endet. Grundsätzlich kann die Schichtfolge auch mit einer zweiten Schicht 6 oder einer dritten Schicht 40 starten, die auf die Trägerfolie 12 als erstes aufgebracht wird und auf die nach einem Trocknungsprozess die erste Schicht 4 oder die zweite Schicht 6 folgt. Diese Schichtabfolge bezüglich des Aufbringens der ersten Schicht 4 auf die Trägerfolie ist grundsätzlich, abgesehen von technischen Voraussetzungen, beliebig. Es ist jedoch dabei zweckmäßig, dass der gesamte Magnetblechstapel im Grünzustand 2-1 mit einer anderen Schicht 4, 6 oder 40 abschließt als die, mit der er beginnt. Würde das Beispiel in Figur 3 mit einer zweiten Schicht 6 beginnen, so sollte auf der gegenüberliegend endenden Seite eine Schicht 4 oder 40 vorhanden sein. Dies ist deshalb zweckmäßig, da diese Magnetblechstapel 2-1 wiederum in zweckmäßiger Weise übereinandergestapelt werden können. Dies ist in Figur 7 schematisch dargestellt, dort werden zunächst einzelne Magnetblechstapel 2-1 im Grünzustand gestapelt, wobei in Figur 7a unten einer zweiten Schicht 6 eine dritte Schicht 40 des darüber angeordneten Magnetblechstapels 2-1 folgt. Die alternierende Schichtabfolge 4, 6 bleibt beim Übereinanderlegen von mehreren Magnetblechstapeln 2-1 somit erhalten. Dies führt zu einem Blechpaket 24-1 im Grünzustand gemäß Figur 7b, das nun einem Sinterungsprozess unterzogen wird, wonach ein Blechpaket 24-2 gemäß Figur 7c entsteht.

Bei dem Sinterungsprozess wird das Blechpaket 24-1 zunächst einer thermischen Behandlung unterzogen, sodass insbesondere organische Bindemittel und sonstige flüchtige Bestandteile aus den Zwischenräumen der Partikel 5 bzw. auch aus den keramischen Partikeln 7 der zweiten Schicht 6 entfernt werden. Die Partikel 5 und Partikel 7 in den jeweiligen Schichten 4, 6 liegen somit aneinander gepresst mechanisch verspannt und verklammert analog der schematischen Mikrostrukturdarstellung nach Figur 10 vor. Hier ist die Grenze zwischen der ersten Schicht 4 und der zweiten Schicht 6 schematisch in dem Zustand dargestellt, in dem bereits die Bindemittel thermisch aus den Poren zwischen den einzelnen Partikeln 5 und 7 entfernt sind. Nach den Sinterprozess, welcher bei Temperaturen von ca. 1.000° C stattfindet, liegt in etwa eine Mikrostruktur vor, wie sie schematisch in Figur 10 dargestellt ist. Die Poren zwischen den einzelnen Partikeln 7, die weichmagnetische Eisenpartikel sind, werden durch Bildung von Sinterhälsen immer mehr geschlossen, sodass eine feste, nahezu porenfreie monolithische Struktur als Gefüge entsteht, wobei diese Struktur dann als das eigentliche Magnetblech 30 bezeichnet werden kann. Analoges gilt für nicht dargestellte unmagnetische Eisen-Partikel. Die in den Figuren 10 und 11 gezeigten Mikrostruktur sind auf Grenzflächen zwischen der zweiten Schicht 6 und der dritten Schicht 40 anwendbar.

Die zweite Schicht 6 wird durch die keramischen Partikel 7 gebildet, die eine höhere Sintertemperatur aufweisen als die Eisenpartikel 5, sodass zwar hier eine Ausbildung von Sinterhälsen entsteht, jedoch keine dichte Versinterung vorliegt. Die Sintertemperatur der keramischen Partikel 7 liegt etwa 100 - 150° C höher als die der Eisenpartikel 5, weshalb diese Schicht 6 im Endzustand weniger fest ist und dadurch auch mögliche thermisch induzierte Spannungen der ersten Schicht 4, also dem nun hergestellten Magnetblech 3, kompensieren kann. Die zweite Schicht 6 ist somit eine Zwischenschicht zwischen der ersten Schichten 4, und der dritten Schicht 40, die das Magnetblech 30 im fertigen Zustand darstellen und erfüllt somit im Wesentlichen zwei Aufgaben. Zum einen wirkt sie magnetisch und elektrisch isolierend gegenüber zwei Magnetblechen 30; zum anderen kompensiert sie thermische und mechanische Spannungen sowohl während des Betriebs einer elektrischen Maschine als auch während der Herstellung während des Sinterprozesses.

Bezüglich der Stapelung von Magnetblechstapeln 2-1 bzw. 2-2 gibt es zur Darstellung in Figur 7 auch noch eine Alternative. Die Magnetblechstapel 2-1 können für sich genommen einem Sinterprozess unterzogen werden und anschließend zu einem Blechpaket 24-2 zusammengefügt werden, wie dies exemplarisch in Figur 9 dargestellt ist. Hier hat man ein fertiges, gesintertes und fertig bearbeitetes Blechpaket 24-2, das aus dem Übereinanderlegen mehrerer Magnetblechstapel 2-2 im bereits gesinterten Zustand aufgebaut ist.

Eine alternative Herstellungsmethode zur Darstellung des Schlickerschicht-Laminats 10 zu dem Verfahren gemäß Figur 1 ist in Figur 4 gegeben. Analog zu Figur 1 wird dabei ein Schlicker 15 mittels einer Schlickerauftrag-Vorrichtung 14 auf eine Trägerfolie 12 aufgebracht. Es erfolgt eine Trocknung mittels einer Trocknungsvorrichtung 9, sodass eine getrocknete Oberfläche 8 entsteht. Als nächstes wird ebenfalls analog zu Figur 1 die zweite Schicht 6 aufgetragen. Im Weiteren erfolgt nun im Unterschied zu dem Verfahren gemäß Figur 1 das Auftragen der dritten Schicht 40 diskontinuierlich. Dabei gibt es grundsätzlich zwei praktikable Möglichkeiten: Zum einen wird auf die getrocknete Oberfläche 8 der dritten Schicht 40 mittels einer alternativen Auftragungsvorrichtung 28, diesmal als Siebdruckvorrichtung 29 ausgestaltet, auf die zweite Schicht 6 aufgetragen. Die dritte Schicht 40 kann dabei verschiedene Konturen haben. Im einfachsten Fall ist sie rondenförmig ausgestaltet und sie wird beim folgenden Ausstanzen des Laminats 10 in die gewünschte Form gebracht.

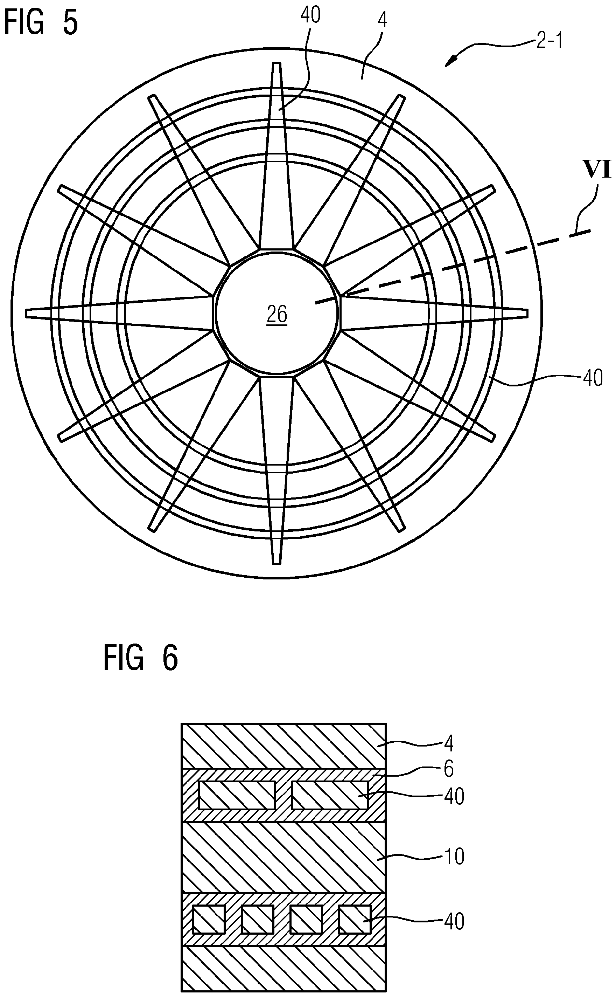

Alternativ dazu kann die dritte Schicht 40 auch in einer komplexeren Form und in unterschiedlichen Lagen des Laminats 10 unterschiedlich ausgestaltet sein. Dies ist in den Figuren 5 und 6 veranschaulicht. Hier weist die dritte Schicht 40 in den verschiedenen Ebenen unterschiedliche Geometrien auf. Diese Geometrien sind insbesondere auf verschiedene mechanische Belastungsformen ausgerichtet. Beziehungsweise kann so mehreren auftretenden mechanischen Beanspruchungsformen innerhalb eines Magnetblechs 30 oder innerhalb eines Blechpakets 24-2 entgegengewirkt werden. So kann es zweckmäßig sein, dass beispielsweise in einer Ebene eine sternförmige Struktur vorliegt und in einer anderen Ebene eine Struktur mit konzentrischen Ringen vorliegt. Dies ist schematisch in der Draufsicht auf ein Magnetblechstapel 2-1 in Figur 5 veranschaulicht und es ist ebenfalls schematisch in der Querschnitt-Darstellung in Figur 6 zu erkennen.

Der so aufgetragene Schlicker 15" für die dritte Schicht 40 ist in diesem Fall pastenförmig ausgestaltet. Er weist eine höhere Viskosität auf als der Gießschlicker 15, der für die erste Schicht 4 verwendet wird. Durch Reduktion des flüssigen Trägermittels und durch Verwendung verschiedener Thixotropiermittel kann die Viskosität des Schlickes 15 bzw. 15' und 15" entsprechend eingestellt werden.

In einer alternativen Ausgestaltung ist die Auftragsvorrichtung 28 in Form einer Sprühvorrichtung 31 ausgestaltet. Hierbei wird in der sehr schematischen Darstellung gemäß Figur 4 nicht unterschieden. Daher wird nach demselben Prinzip anstatt mittels eines Siebdruck- oder Schablonendruckverfahrens ein in diesem Fall sehr niedrigviskoser Schlicker 15" diskontinuierlich auf die Oberfläche 8 der ersten Schicht 4 in derselben Kontur aufgebracht. Bei der Sprühvorrichtung 31 kann ebenfalls eine Schablone zum Einsatz kommen, sodass der Schlicker 15" lediglich an den Flächen auf die Oberfläche 8 aufgebracht wird, die nicht von der hier nicht explizit dargestellten Schablone abgedeckt sind. Andererseits kann die Sprühvorrichtung 31 auch in der Art ausgestaltet sein, dass gezielt durch Düsen auf die gewünschten Flächen der Schlicker 15" so aufgebracht wird, damit die gewünschte Kontur entsteht.

Im Weiteren erfolgt wiederum mittels einer Auftragsvorrichtung 14 der Auftrag des Schlickers 15' einer weiteren zweiten Schicht 6`. Dieser Schlicker 15' fließt dabei auch in die Zwischenräume des diskontinuierlich aufgebrachten Schlickers 15" der dritte Schicht 40. Hieraus resultiert ein Schlickerschicht-Laminat 10, das durch das bereits beschriebene Abtrennverfahren zu einem Magnetblechstapel 2-1 herausgetrennt wird. Der Querschnitt eines derartigen Schlickerschicht-Laminats 10 ist in Figur 5 schematisch abgebildet. Hierbei ist zu erkennen, dass die dritte Schicht 40 diskontinuierlich zwischen den zweiten Schichten 6 verläuft und durch Material der zweiten Schicht 6 unterbrochen ist. Der wesentliche Vorteil dieser Herstellungsvariante besteht darin, dass das Abtrennen des Magnetblechstapels 2-1 im Grünzustand genau an den jeweilig äußeren Kanten der dritten Schicht 40 erfolgt, sodass die abgetrennten Reste aus reinem getrocknetem Schlickermaterial 15 der ersten Schicht 4 und 15' der zweiten Schicht bestehen und somit mit weniger Aufwand wieder redispergiert werden können. Dies ist prozessual günstiger und mit weniger Energieaufwand durchzuführen. Außerdem kann durch das diskontinuierliche Aufbringen der dritten Schicht 40 wie bereits beschrieben, durch entsprechende Geometrieformen auf die einzelnen mechanischen Belastungsformen eingegangen werden.

Im Gegensatz dazu besteht der Vorteil des Verfahrens gemäß Figur 1 darin, dass zwei kontinuierliche Schichten gezogen werden können, was gegenüber dem kontinuierlichen Aufbringen, beispielsweise dem Sprühen oder dem Siebdrucken, wiederum weniger technischen Aufwand bedeutet. Welche dieser beiden Varianten dabei zum Einsatz kommt, hängt insbesondere von der Geometrie des Magnetblechstapels 2-1 sowie von dem Vorhandensein verschiedener Trennverfahren der unterschiedlichen Schlicker 15 und 15' ab.

Alle weiteren Optionen und Verfahren bezüglich des Stapelns und Sinterns des Magnetblechstapels 2-1 zu dem Magnetblechstapel 2-2 und dem Zusammensetzen zu dem Blechpaket 24, das dann wiederum in eine elektrische Maschine, insbesondere in einen Elektromotor oder einen Generator eingebaut wird und in diesem entweder einen Rotor oder einen Stator bildet, sind analog zu dem bereits beschriebenen bezüglich Figur 1 ausgestaltet.

### Bezugszeichenliste:

- 2: Magnetblechstapel
- 2-1: Magnetblechstapel im Grünzustand
- 2-2: Magnetblechstapel gesintert
- 4: erste Schlickerschicht
- 5: weichmagnetische Partikel
- 6: zweite Schlickerschicht
- 7: keramische Partikel
- 8: getrocknete Oberfläche
- 9: Trocknungsvorrichtung
- 10: Schlickerschicht-Laminat
- 12: Trägerfolie
- 14: Schlickerauftrag-Vorrichtung
- 15: Schlicker
- 16: Dicke erste Schicht
- 18: Partikeldurchmesser weichmagnetischer Partikel
- 20: Dicke zweite Schicht
- 22: mittlerer Partikeldurchmesser keramische Partikel
- 24: Blechpaket
- 26: Wellenbohrung
- 28: Auftragsvorrichtung diskontinuierlich
- 29: Siebdruckvorrichtung
- 30: Magnetblech
- 31: Sprühvorrichtung
- 40: dritte Schlickerschicht

## Patentansprüche

1. Verfahren zur Erzeugung eines Magnetblechstapels (2-2) für eine elektrische Maschine, umfassend folgende Schritte,
a) Erzeugen einer ersten kontinuierlichen Schlickerschicht (4), die weichmagnetische Partikel (5) umfasst,
b) Trocknen der ersten Schlickerschicht (4),
c) Aufbringen einer zweiten kontinuierlichen Schlickerschicht (6), die keramische Partikel (7) auf eine getrocknete Oberfläche der ersten Schicht (4),
d) Aufbringen einer dritten Schlickerschicht (40) auf die getrocknete zweite Schlickerschicht (6), wobei die dritte Schicht (40) unmagnetische Stahlpartikel aufweist,
e) Trocknen der dritten Schicht (40)und Aufbringen einer weiteren zweiten Schicht (6) auf die dritte Schicht (40),
f) Trocknen der weiteren zweiten Schicht (6)
g) Wiederholen der Schritte a) bis f) so dass ein Schlickerschicht-Laminat (10) im Grünzustand entsteht, wobei jeweils zwischen einer ersten Schicht (4) und einer dritten Schicht 40 eine zweite Schicht (6) angeordnet ist,
h) Heraustrennen von Magnetblechstapeln (2-1) im Grünzustand aus dem Laminat (10),
i) Entbindern des Magnetblechstapels (2-1),
j) Sintern des Magnetblechstapels (2-1) im Grünzustand zum Magnetblechstapel (2-2).

2. Verfahren nach Anspruch 1, **dadurch gekennzeichnet, dass** die weichmagnetischen Partikel (5) mindestens 96 Gew. % Eisen enthalten.

3. Verfahren nach Anspruch 1 oder 2, **dadurch gekennzeichnet, dass** die unmagnetischen Stahlpartikel eine Eisen-Chrom-Nickel-Legierung umfassen.

4. Verfahren nach Anspruch 1 oder 2, **dadurch gekennzeichnet, dass** die keramischen Partikel (7) eine Sintertemperatur aufweisen, die mindestens 100 ° K über der Sintertemperatur der weichmagnetischen Partikel (5) und der unmagnetische Stahlpartikel beträgt.

5. Verfahren nach einem der vorhergehenden Ansprüche, **dadurch gekennzeichnet, dass** die erste oder die zweite Schicht auf einer Trägerfolie (12) aufgebracht wird, wobei die Trägerfolie (12) und eine Schlickerauftrag-Vorrichtung (14) translatorisch zueinander bewegt werden.

6. Verfahren nach einem der vorhergehenden Ansprüche, **dadurch gekennzeichnet, dass** die dritte Schicht (40) diskontinuierlich aufgebracht wird.

7. Verfahren nach Anspruch 5, **dadurch gekennzeichnet, dass** die dritte Schicht (40) durch ein Sprühverfahren oder ein Druckverfahren aufgebracht wird.

8. Verfahren nach Anspruch 6 oder 7, **dadurch gekennzeichnet, dass** das diskontinuierliche Aufbringen mittels einer Schablone erfolgt.

9. Verfahren nach einem der vorhergehenden Ansprüche, **dadurch gekennzeichnet, dass** die Dicke (16) der ersten Schicht (4) zwischen 20 pm und 200 pm, insbesondere zwischen 50 pm und 150 pm liegt.

10. Verfahren nach einem der vorhergehenden Ansprüche, **dadurch gekennzeichnet, dass** ein mittlerer Partikeldurchmesser (18) der weichmagnetischen Partikel (5) zwischen 2 pm und 50 pm, insbesondere zwischen 2 pm und 20 pm liegt.

11. Verfahren nach einem der vorhergehenden Ansprüche, **dadurch gekennzeichnet, dass** die Dicke der zweiten Schicht (6) zwischen 1 pm und 20 pm, insbesondere zwischen 1 pm und 10 pm liegt.

12. Verfahren nach einem der vorhergehenden Ansprüche, **dadurch gekennzeichnet, dass** ein mittlerer Partikeldurchmesser (22) der keramischen Partikel (7) zwischen 0,5 pm und 5 pm, insbesondere zwischen 1 pm und 4 pm liegt.

13. Verfahren nach einem der vorhergehenden Ansprüche, **dadurch gekennzeichnet, dass** das Heraustrennen von Magnetblechstapeln (2-1) aus dem Laminat (10) mittels eines Stanzverfahrens, eines Laserschneid-Verfahrens oder eines Wasserstrahl-Verfahrens erfolgt.

14. Verfahren nach einem der vorhergehenden Ansprüche, **dadurch gekennzeichnet, dass** mehrere gesinterte Magnetblechstapel (2-2) zu einem Blechpaket (24) gestapelt werden.

15. Elektrische Maschine umfassend ein Blechpaket (24), hergestellt mittels eines Verfahrens nach Anspruch 13.
